# EUROPEAN PATENT SPECIFICATION

(11) **EP 2 325 923 B1**
(45) Date of publication and mention of the grant of the patent: **16.04.2014**
(21) Application number: 10170575.4
(22) Date of filing: 23.07.2010
(51) Int. Cl.: H01M 2/10

(54) **Battery pack with improved stability**
Batteriepack mit verbesserter Stabilität
Bloc-batterie à stabilité améliorée

(30) Priority: 19.11.2009 US 272929 P
(43) Date of publication of application: 25.05.2011
(73) Proprietor: Samsung SDI Co., Ltd., Gyeonggi-do (KR); Robert Bosch GmbH, 70442 Stuttgart (DE)
(72) Inventor: Lee, Hyun-Ye, Gyeonggi-do (KR); Kim, Tae-Yong, Gyeonggi-do (KR); Kim, Myung-Chul, Gyeonggi-do (KR); Park, Shi-Dong, Gyeonggi-do (KR)
(74) Representative: Gulde Hengelhaupt Ziebig & Schneider

(56) References cited:
- US-A1- 2008 124 622

## Description

### Field of the Invention

One or more embodiments of the present invention relate to a battery pack, and more particularly, to a battery pack formed by vertically or horizontally stacking battery modules, each of which is formed by stacking a plurality of unit battery cells.

### Description of the Related Art

Unlike primary batteries that are not rechargeable, secondary batteries are rechargeable and dischargeable. Secondary batteries are broadly used in high-tech electronic devices such as cellular phones, notebook computers and camcorders and also are used in vehicles.

A secondary battery includes an electrode assembly and an electrolyte. The electrode assembly includes a positive plate, a negative plate and a separator. The electrolyte includes lithium ions in many cases. The positive plate and the negative plate of the electrode assembly may include electrode tabs protruding outward.

The electrode assembly may be accommodated in a case and electrode terminals may be exposed outside the case. The electrode tabs may protrude outside the electrode assembly so as to be electrically connected to the electrode terminals. The case may have a cylindrical shape or an angular shape.

A plurality of unit battery cells that are secondary batteries may be horizontally or vertically stacked so as to form a battery module. Also, a plurality of battery modules may be vertically and/or horizontally stacked so as to form one battery pack.

### SUMMARY

One or more embodiments of the present invention include a battery pack formed by vertically and/or horizontally stacking battery modules, each of which is formed by stacking a plurality of unit battery cells, in which deflection of the battery modules may be reduced.

Additional aspects will be set forth in part in the description which follows and, in part, will be apparent from the description, or may be learned by practice of the presented embodiments.

According to one or more embodiments of the present invention, a battery pack comprises at least a first battery module and a second battery module coupled to each other, wherein each battery module comprises a plurality of secondary batteries stacked along a first direction, and a pair of end plates disposed at both end portions of the plurality of secondary batteries along the first direction, a pair of side frames extending along the first direction on a first and second side surface of the plurality of secondary batteries, respectively, and coupled to the pair of end plates, an upper frame disposed on the top surface of the plurality of secondary batteries along the first direction, and a lower frame formed below the bottom surface of the plurality of secondary batteries along the first direction. The first battery module and the second battery module are arranged along a second direction. Further, at least one supporting block is arranged between the first and second battery module, the at least one supporting block being separate or distinct from the end plates and having contact surfaces contacting the first and second battery modules. The at least one supporting block is formed as an elastic member such that the first and second battery modules elastically support each other. Each supporting block contacts at least one surface of secondary batteries of the first and second battery modules. The plurality of supporting blocks is disposed at two sides with respect to the upper frame.

"Being separate" in this respect means that the supporting block and the end plates are separate parts not coupled to each other. In other words, they are distinct parts and are also arranged at different places on or at the battery modules. In yet other words, one may say that the end plates and the supporting blocks are different modules. Both have a function of support. However, the end plates support end parts of the battery modules, while the supporting blocks support the battery modules in the space between the end plates. Thus, the supporting blocks are formed on and contact at least one surface of the respective battery module between the end plates. If the battery modules are stacked vertically, the supporting blocks are arranged on the upper surface of the lower battery module to support the weight of the upper battery module between the end plates.

Preferably, the at least one supporting block is fixed to the first and second battery modules.

Preferably, a plurality of supporting blocks is provided and at least one of the plurality of supporting blocks comprises an elastic member or comprises an elastic material to elastically support the respective battery modules.

In another embodiment, a single supporting block is provided, the supporting block comprising an elastic member or comprises an elastic material to elastically support the respective battery modules.

The supporting block may comprise rubber.

The plurality of secondary batteries of the first battery module may be provided spaced apart from the plurality of secondary batteries of the second battery module by a distance along the second direction, wherein the height of the at least one supporting block in a non-compressed state is greater than the size of the distance.

Preferably, the at least one supporting block contacts at least one surface of secondary batteries of the first and second battery modules.

In a preferred embodiment, a plurality of supporting blocks is arranged to uniformly distribute the weight of the battery modules.

Double-side tape may be adhered to at least one contact surface of the supporting block to adhere the supporting block to the first and/or second battery modules. Alternatively, an adhesive agent may be coated on at least one contact surface of the supporting blocks to adhere the supporting block to the first and/or second battery modules.

A through hole or a groove may be formed in at least one contact surface of the at least one supporting block.

Preferably, a contact surface of the supporting block contacts at least two secondary batteries of the first or second battery module, respectively.

The supporting block may have a cylindrical, a polygonal, pillar or barrel shape.

It is further provided a vehicle comprising the battery pack according to the invention.

According to one or more embodiments of the present invention, in a battery pack formed by vertically and/or horizontally stacking battery modules, each of which is formed by stacking a plurality of unit battery cells, deflection of the battery modules may be reduced.

### BRIEF DESCRIPTION OF THE DRAWINGS

These and/or other aspects will become apparent and more readily appreciated from the following description of the embodiments, taken in conjunction with the accompanying drawings of which:
FIG. 1 is a perspective view of a battery module in which a plurality of battery cells are horizontally stacked, according to an embodiment of the present invention;
FIG. 2 is an exploded perspective view of the battery module illustrated in FIG. 1, according to an embodiment of the present invention;
FIG. 3 is a perspective view of a unit battery cell included in the battery module illustrated in FIG. 1, according to an embodiment of the present invention;
FIG. 4 is a perspective view of vertically stacked battery modules between which supporting blocks are disposed, according to an embodiment of the present invention;
FIG. 5 is a perspective view of the battery modules illustrated in FIG. 4 when the battery modules are separated, according to an embodiment of the present invention;
FIG. 6 is a perspective view of a battery pack in which a plurality of the battery modules illustrated in FIG. 1 are vertically and horizontally stacked and are supported by an external frame, according to an embodiment of the present invention; and
FIG. 7 is an image of an electric car using the battery pack illustrated in FIG. 6, according to an embodiment of the present invention.

### DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description.

A battery pack 10 according to an embodiment of the present invention may be formed by vertically and/or horizontally stacking one or more battery modules 100. Also, each of the battery modules 100 may be formed by vertically and/or horizontally stacking one or more unit battery cells 110.

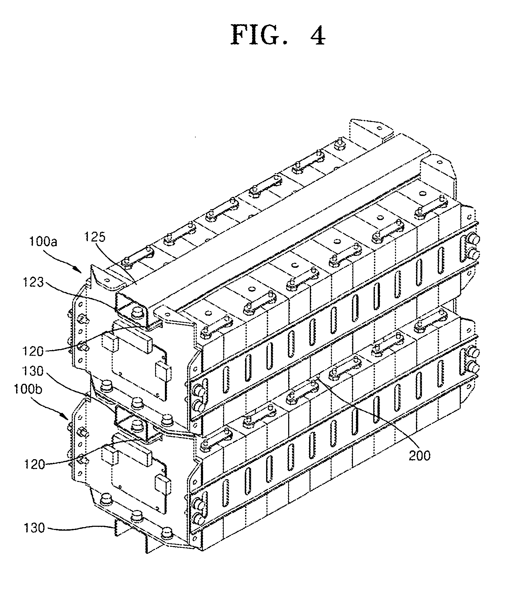

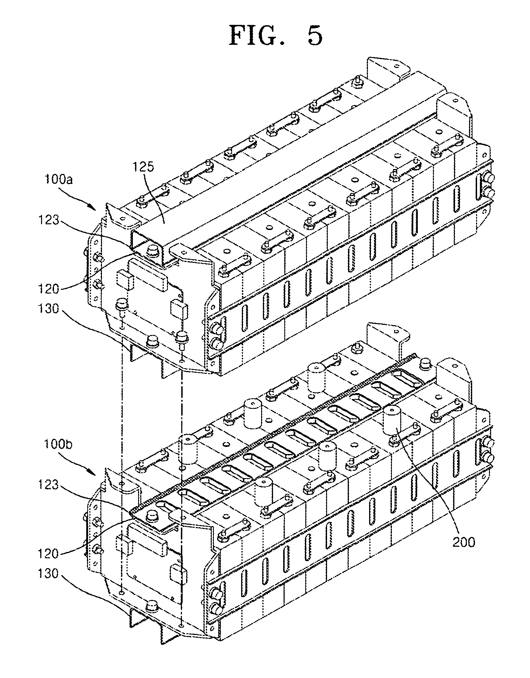

In this case, as illustrated in FIGS. 4 and 5, the battery pack 10 may be formed by vertically stacking a plurality of battery modules 100a and 100b. Battery modules 100a and 100b include an upper battery module 100a and a lower battery module 100b which are vertically stacked together.

When the battery modules 100a and 100b are vertically stacked, the upper battery module 100a may be deflected due to the weight of a plurality of unit battery cells 110. Also, vibration of the battery modules 100 may occur due to the deflection of the upper battery module 100a.

However, in the battery pack 10 according to an embodiment of the present invention, one or more supporting blocks 200 may be formed between the battery modules 100a and 100b that are vertically stacked. In this case, the supporting blocks 200 may reduce deflection and vibration of the battery modules 100 by supporting portions of the battery modules 100 to be deflected.

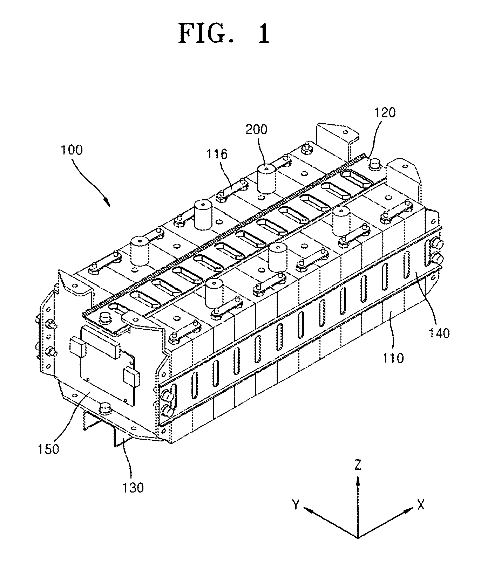

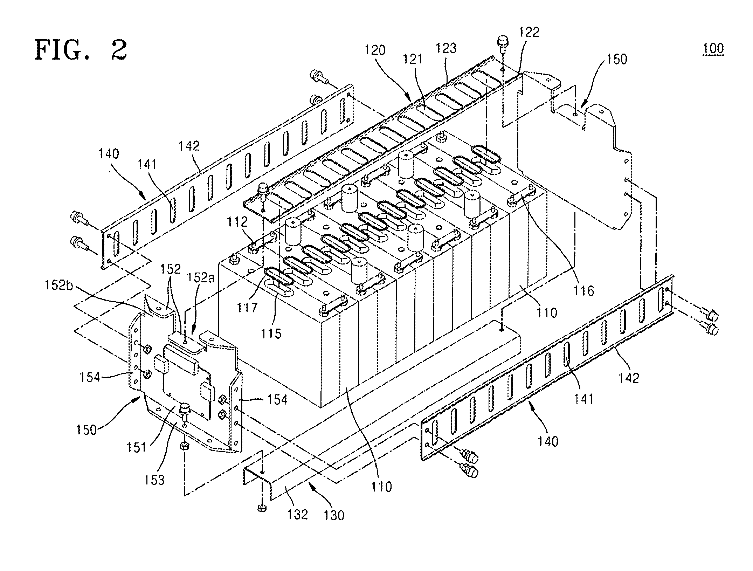

FIG. 1 is a perspective view of a battery module 100 in which a plurality of battery cells 110 are horizontally stacked, according to an embodiment of the present invention. FIG. 2 is an exploded perspective view of the battery module 100 illustrated in FIG. 1, according to an embodiment of the present invention. A battery pack is formed by vertically and/or horizontally stacking a plurality of the battery modules 100.

Referring to FIGS. 1 and 2, the battery module 100 may include a plurality of unit battery cells 110, an upper frame 120, a lower frame 130, side frames 140, and end plates 150.

The unit battery cells 110 may be stacked in a first direction so as to form the battery module 100. The upper frame 120 is disposed on the unit battery cells 110 stacked in the first direction so as to support the unit battery cells 110 in a second direction from upper surfaces of the unit battery cells 110. The lower frame 130 is disposed under the unit battery cells 110 stacked in the first direction so as to support the unit battery cells 110 from lower surfaces of the unit battery cells 110.

The side frames 140 are disposed at sides of the unit battery cells 110 stacked in the first direction so as to support the unit battery cells 110 from side surfaces of the unit battery cells 110. A pair of the end plates 150 are disposed at ends of the unit battery cells 110 stacked in the first direction so as to support the unit battery cells 110 from the ends of the unit battery cells 110.

Here, the first direction may be an X direction and the second direction may be a Z direction. In this case, if the battery modules 100 are horizontally arranged, the X direction may be a horizontal direction and the Z direction may be a vertical direction. However, the present invention is not limited thereto and the X and Z directions may differ according to the arrangement direction of the battery modules 100.

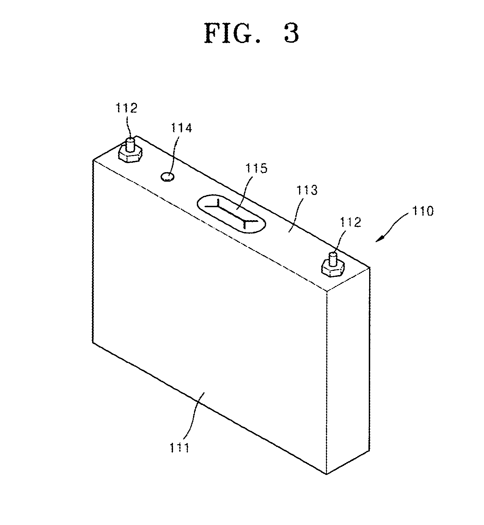

FIG. 3 is a perspective view of a unit battery cell 110 included in the battery module 100 illustrated in FIG. 1, according to an embodiment of the present invention. A plurality of the unit battery cells 110 may be stacked in a horizontal direction so as to form the battery module 100. The unit battery cell 110 may be generally formed in an angular shape as illustrated in FIG. 3. However, the present invention is not limited thereto and the unit battery cell 110 may have various shapes such as a cylindrical shape or a pouch shape.

Referring to FIGS. 1, 2 and 3, a general secondary battery may be used as the unit battery cell 110. The secondary battery may include an electrode assembly and an electrolyte. The electrode assembly may include a positive plate, a negative plate and a separator. The electrolyte may include lithium ions. The positive plate and the negative plate of the electrode assembly may protrude outward so as to be electrically connected to a current collector.

The electrode assembly may be accommodated in a case 111 and electrode terminals 112 may be exposed outside the case 111. The current collector electrically connected to the positive plate and the negative plate may be electrically connected to the electrode terminals 112. The case 111 may have a cylindrical shape or an angular shape. The unit battery cell 110 may include a plurality of electrode assemblies in one case 111.

The unit battery cells 110 may be horizontally stacked so as to form the battery module 100. In the battery module 100, the electrode terminals 112 of neighboring unit battery cells 110 may be electrically connected to each other. In this case, the electrode terminals 112 of the neighboring unit battery cells 110 may be electrically connected to each other by using bus bars 116.

The neighboring unit battery cells 110 may be disposed so that their polarities are opposite to each other. The unit battery cells 110 may be connected in parallel, in series, or in parallel and series. As such, the unit battery cells 110 are sequentially connected to each other so as to form one battery module 100. The connection method and the number of the unit battery cells 110 may be determined in consideration of required capacities of recharge or discharge when the unit battery cells 110 are designed.

A cap plate 113 may be combined to an opening portion of the case 111. The cap plate 113 may be a thin plate. An electrolyte inlet for injecting the electrolyte into the case 111 may be formed in the cap plate 113. The electrolyte inlet may be sealed with a sealing plug 114 after the electrolyte is injected.

Also, a vent member 115 in which grooves are formed may be formed on the cap plate 113 such that the vent member 115 may be broken when a set internal pressure is reached. If the upper frame 120 is disposed on the unit battery cells 110 that are horizontally stacked, an exhaust outlet 121 of the upper frame 120 may be disposed on the vent member 115.

The unit battery cell 110 illustrated in FIG. 3 may be a lithium-ion secondary battery. However, the present invention is not limited thereto and, in addition to the lithium-ion secondary battery, various batteries such as a nickel-cadmium secondary battery, a nickel-hydrogen secondary battery and a lithium battery may be used as the unit battery cell 110.

Meanwhile, in the unit battery cell 110 containing lithium, the electrode assembly expands or contracts when recharge or discharge occurs. In this case, the expansion and the contraction of the electrode assembly may apply physical force to the case 111. Accordingly, the case 111 physically expands and contracts in correspondence with the expansion and the contraction of the electrode assembly.

The case 111 may be deformed due to repeated expansion and contraction. The expansion in volume may increase resistance so as to reduce the efficiency of the unit battery cell 110. Thus, a pair of the end plates 150 may be disposed at two ends of the unit battery cells 110 that are horizontally and/or vertically arranged and are mechanically connected to each other.

In this case, the upper frame 120, the lower frame 130 and the side frames 140 may be respectively supported on upper, lower and side surfaces of the end plates 150 and may compressively fix the unit battery cells 110 so as not to horizontally extend due to the expansion of the unit battery cells 110.

The end plates 150 may be disposed at two ends of the battery module 100. A pair of the end plates 150 respectively contact outer surfaces of the unit battery cells 110 disposed at two ends of the battery module 100, so as to support the stacked unit battery cells 110.

An end plate 150 may include a base plate 151 and flanges 152, 153 and 154. The base plate 151 has a size that is sufficient to cover an outer surface of the unit battery cells 110. Although the base plate 111 has an almost square shape in FIGS. 1 and 2, the shape of the base plate 111 is not limited thereto. The flanges 152, 153 and 154 may be bent from the base plate 151 away from the unit battery cells 110.

The flanges 152, 153 and 154 include upper flanges 152, a lower flange 153, and side flanges 154. The upper flanges 152 are combined with the upper frame 120. The lower flange 153 is combined with the lower frame 130. The side flanges 154 are correspondingly combined with the side frames 140.

Meanwhile, a plurality of the battery modules 100 may be vertically and/or horizontally stacked so as to form the battery pack. In this case, the end plates 150 of neighboring battery modules 100 may be combined with each other so as to support each other.

In this case, the upper flanges 152 of a current battery module 100 may be combined with the lower flanges 153 of an upper battery module 100. The lower flanges 153 of the current battery module 100 may be combined with the upper flanges 152 of a lower battery module 100. The side flanges 154 of the current battery module 100 may be combined with the side flanges 154 of side battery modules 100.

In this case, the upper, lower and side flanges 152, 153 and 154 may be respectively screw-combined with the upper, lower and side frames 120, 130 and 140 by using bolts and nuts. However, the present invention is not limited thereto and the upper, lower and side flanges 152, 153 and 154 may be respectively combined with the upper, lower and side frames 120, 130 and 140 by using various methods such as a welding method.

The upper frame 120 may be disposed on the unit battery cells 110 that are horizontally stacked, and may be combined with the upper flanges 152 of the end plates 150. In this case, the exhaust outlets 121 are formed in the upper frame 120 in correspondence with the vent members 115 of the unit battery cells 110.

The upper frame 120 may have upper frame bent portions 122 bent from lengthwise edges of the upper frame 120. A sealing member 123 is formed on inner sides of the upper frame bent portions 122. In this case, the sealing member 123 may be formed of an elastic material such as rubber. In this case, the upper frame 120 may be combined with the lower frame 130 of the upper battery module 100 by intervening the sealing member 123 so as to form a gas passage for discharging a sealed gas.

Sealing rings 117 may be formed between the upper frame 120 and the vent members 115 such that a gas ejected from the vent members 115 flows out through the exhaust outlets 121 of the upper frame 120 without influencing a neighboring unit battery cell 110.

In this case, for example, O rings may be used as the sealing rings 117. In this case, grooves 152a in which the upper frame 120 is to be disposed are formed in the middle of upper edges of the end plates 150. Thus, the exhaust outlets 121 of the upper frame 120 may contact the unit battery cells 110.

Also, the sealing rings 117 between the unit battery cells 110 and the upper frame 120 may have a sufficient thickness. Accordingly, when the upper frame 120 is combined with the end plates 150, the upper frame 120 may generate pressure on the unit battery cells 110 so as to compress the sealing rings 117 disposed therebetween and thus the upper frame 120 may contact the unit battery cells 110.

The lower frame 130 is disposed under the unit battery cells 110 so as to support the weight of the unit battery cells 110 and is connected to the lower flanges 153 of the end plates 150. In order to support the weight of the unit battery cells 110, the lower frame 130 may include lower frame bent portions 132 bent away from the unit battery cells 110.

The lower frame bent portions 132 is open downward, and the lower frame bent portions 132 may is combined with the upper frame 120 of the lower battery module 100 so as to form a gas passage. In this case, the gas passage formed by combining the lower frame 130 of the current battery module 100 and the upper frame 120 of the lower battery modules 100 may function as a degassing duct for discharging a generated gas.

In this case, the lower frame 130 of the current battery module 100 and the upper frame 120 of the lower battery modules 100 may degas in a sealed state or may induce degassing even in an incompletely sealed state. A gas generated in the unit battery cells 110 may be accompanied with an explosion or a rapid chemical reaction corresponding to an explosion, and thus the amount of the gas is explosively increased in a short time. Thus, if a degassing duct is formed in the battery pack, the gas may be easily discharged.

The side frames 140 may be disposed at sides of the unit battery cells 110 so as to support the unit battery cells 110 from side surfaces of the unit battery cells 110. The side frames 140 may extend with a uniform width from one of a pair of the end plates 150 to the other of the pair of the end plates 150.

One or more through holes 141 may be formed in each of the side frames 140 so as to reduce the weight of the side frames 140. Also, the side frames 140 may include side frame bent portions 142 bent away from the unit battery cells 110. The side frame bent portions 142 may increase the strength of the side frames 140 against bending.

Meanwhile, one or more supporting blocks 200 may be formed between the battery modules 100 that are vertically stacked. In this case, the supporting blocks 200 may reduce deflection and vibration of the battery module 100 by supporting portions of the battery modules 100 to be deflected.

FIG. 4 is a perspective view of vertically stacked battery modules 100 between which supporting blocks 200 are disposed, according to an embodiment of the present invention. FIG. 5 is a perspective view of the battery modules 100 illustrated in FIG. 4 when the battery modules 100 are separated, according to an embodiment of the present invention.

Referring to FIGS. 4 and 5, the battery pack 10 may be formed by vertically stacking a plurality of battery modules 100a and 100b. Battery modules 100a and 100b include an upper battery module 100a and a lower battery module 100b which are vertically stacked together.

In the battery modules 100, the supporting blocks 200 may contact upper surfaces of unit battery cells 110 of the lower battery module 100b and lower surfaces of unit battery cells 110 of the upper battery module 100a.

In this case, double-sided tape may be adhered to upper and lower surfaces of the supporting blocks 200 such that the supporting blocks 200 may be adhered and fixed to the battery modules 100a and 100b. According to another embodiment of the present invention, an adhesive agent may be coated on contact portions of the supporting blocks 200 and the battery modules 100a and 100b so as to adhere the supporting blocks 200 to the battery modules 100a and 100b.

However, the present invention is not limited thereto and the supporting blocks 200 may be fixed to the battery modules 100a and 100b by using various methods or may be supported due to the pressure between the battery modules 100a and 100b without using an additional fixing means.

A plurality of the supporting blocks 200 may be used. The supporting blocks 200 may be disposed so as to uniformly distribute the weight of the upper battery module 100a to be supported. For this, the same number of the supporting blocks 200 may be disposed at two sides with respect to the upper frame 120. In this case, an even number of the supporting blocks 200 may be disposed.

The supporting blocks 200 may be formed as elastic members such that the battery modules 100a and 100b elastically support each other. For example, the supporting blocks 200 may be rubber blocks. In this case, in an un-assembled state, the supporting blocks 200 may be formed to have a height slightly greater than the distance between the unit battery cells 110 of the battery modules 100a and 100b so as to provide elastic bias.

The supporting blocks 200 may be formed in a cylindrical shape, a polygonal pillar shape, or a barrel shape. In this case, in order to stably contact the unit battery cells 110, surfaces of the supporting blocks 200 to contact the unit battery cells 110 may be formed to be flat. However, the shape of the supporting blocks 200 is not limited thereto and may be variously changed.

Through holes or grooves may be formed in surfaces of the supporting blocks 200 to contact the unit battery cells 110. In this case, the elastic force of the supporting blocks 200 may be increased. The supporting blocks 200 may reduce deflection and vibration of the upper battery module 100a by supporting portions of the upper battery module 100a to be deflected.

The at least one supporting block 200 and the end plates 150 are separate or distinct members. "Being separate" in this respect means that the supporting block 200 and the end plates 150 are separate parts not coupled to each other. In other words, they are distinct parts and are also arranged at different places on or at the battery modules 100a, 100b. In yet other words, one may say that the end plates and the supporting blocks 200 are different modules. Both have a function of support. However, the end plates 150 support end faces of the battery modules 100a, 100b, while the supporting blocks 200 support the battery modules 100a, 100b in the space between the end plates 150. Thus, the supporting blocks 200 are formed on and contact at least one surface of the respective battery module 100a, 100b between the end plates 150. If the battery modules 100a, 100b are stacked vertically, the supporting blocks 200 are arranged on the upper surface of the lower battery module 100b to support the weight of the upper battery module 100a between the end plates 150.

Meanwhile, the upper battery module 100a disposed at the top layer may further include a cover 125 for covering the upper frame 120. In this case, the cover 125 may form a degassing duct for discharging a gas generated in the top battery module 100.

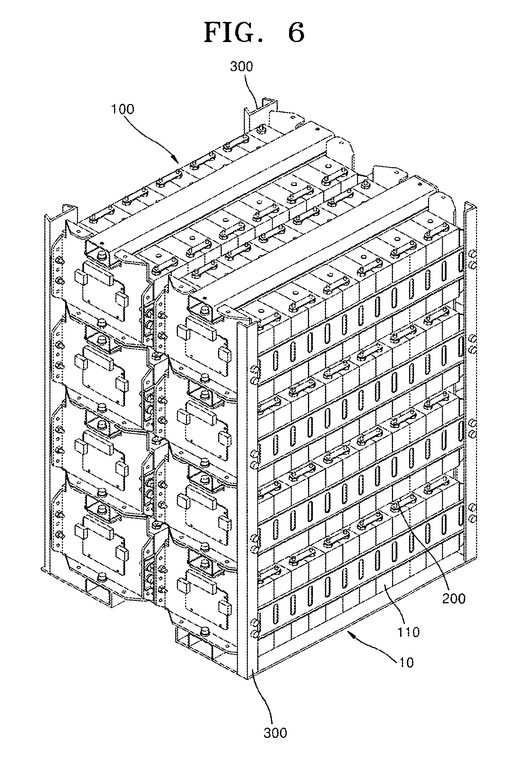

FIG. 6 is a perspective view of a battery pack 10 in which a plurality of the battery modules 100 illustrated in FIG. 1 are vertically and horizontally stacked and are supported by an external frame 300, according to an embodiment of the present invention.

Referring to FIG. 6, the battery pack 10 is formed by stacking eight battery modules 100, each of which is formed by horizontally stacking the unit battery cells 110, in two columns of four layers, and combining the battery modules 100.

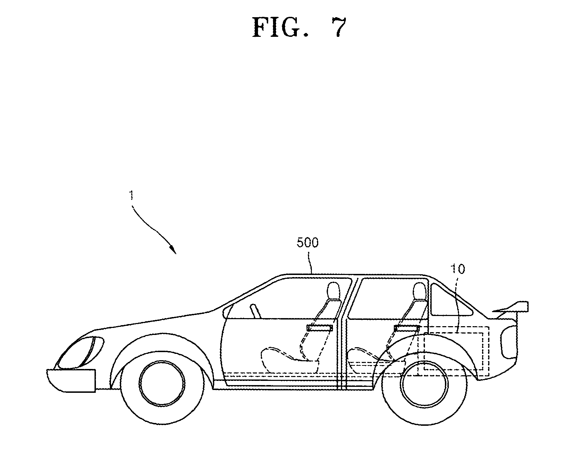

FIG. 7 is an image of an electric car 1 using the battery pack 10 illustrated in FIG. 6, according to an embodiment of the present invention.

Referring to FIG. 7, the battery pack 10 according to an embodiment of the present invention is equipped in the body 500 of the electric car 1.

In the electric car 1 using the battery pack 10, as the electric car 1 runs, a dynamic load may be applied to the battery pack 10. In this case, deflection and/or vibration may occur in the battery modules 100 that are vertical and/or horizontally stacked.

However, in the battery pack 10 according to an embodiment of the present invention, the supporting blocks 200 may reduce the deflection and vibration of the battery modules 100 by supporting portions of the battery modules 100 to be deflected.

As described above, according to the one or more of the above embodiments of the present invention, in a battery pack formed by vertically or horizontally stacking battery modules, each of which is formed by stacking a plurality of unit battery cells, deflection of the battery modules may be reduced.

It should be understood that the exemplary embodiments described therein should be considered in a descriptive sense only and not for purposes of limitation. Descriptions of features or aspects within each embodiment should typically be considered as available for other similar features or aspects in other embodiments.

## Claims

1. A battery pack comprising at least a first battery module (100) and a second battery module (100) coupled to each other, wherein each battery module (100) comprises:
a plurality of secondary batteries (110) stacked along a first direction (X) being a horizontal direction, and a pair of end plates (150) disposed at both end portions of the plurality of secondary batteries (110) along the first direction (X), each secondary battery (110) having a rectangular shape with two long sides opposed to each other, two short sides opposed to each other and a top and bottom side opposed to each other,
**characterized in that**
the first battery module (100) and the second battery module (100) are arranged along a second direction (Z) being a vertical direction,
a pair of side frames (140) extending along the first direction (X) on a first and second side surface of the plurality of secondary batteries (110), respectively, and coupled to the pair of end plates (150),
an upper frame (120) disposed on the top surface of the plurality of secondary batteries (110) along the first direction (X), and
a lower frame (130) formed below the bottom surface of the plurality of secondary batteries (110) along the first direction (X),
wherein an upper frame (120) of the first battery module (100) and a lower frame (130) of the second battery module (100) are combined to form a gas discharge passage,
a plurality of supporting blocks (200) is arranged between the first and second battery module (100), the at least one supporting block (200) being separate from the end plates (150) and having contact surfaces contacting the first and second battery modules (100), wherein the at least one supporting block (200) is formed as elastic member such that the first and second battery modules (100) elastically support each other,
each supporting block (100) extends along the vertical direction and contacts at least one surface of secondary batteries (110) of the first and second battery modules (100), and
the plurality of supporting blocks (200) is disposed at two sides with respect to the upper frame (120).

2. Battery pack of claim 1, wherein each of the plurality of supporting blocks (200) is fixed to the first and second battery modules (100).

3. Battery pack of claim 2, wherein each supporting block (200) comprises rubber.

4. Battery pack of any of claims 2 or 3, wherein the plurality of secondary batteries (110) of the first battery module (100) is provided spaced apart from the plurality of secondary batteries (110) of the second battery module (100) by a distance (d) along the second direction (Z), wherein the height of the at least one supporting block (200) in a non-compressed state is greater than the size of the distance (d).

5. Battery pack of any of the previous claims, wherein double-side tape is adhered to at least one contact surface of the supporting block (200) to adhere the supporting block (200) to the first and/or second battery modules (100).

6. Battery pack of any of claims 1 to 5, wherein an adhesive agent is coated on at least one contact surface of the supporting blocks (200) to adhere the supporting block (200) to the first and/or second battery modules (100).

7. Battery pack of any of the previous claims, wherein a through hole or a groove is formed in at least one contact surface of the at least one supporting block (200).

8. Battery pack of any of the previous claims, wherein a contact surface of the supporting block (200) contacts at least two secondary batteries of the first or second battery module (100), respectively.

9. Battery pack of any of the previous claims, wherein the supporting block (200) has a cylindrical, a polygonal, pillar or barrel shape.

10. A vehicle (400) comprising the battery pack (300) of one of claims 1 to 9.

## Patentansprüche

1. Batteriepack, umfassend mindestens ein erstes Batteriemodut (100) und ein zweites Batte-riemodul (100), die miteinander verbunden sind, wobei jedes Batteriemodul (100) umfasst:
eine Vielzahl von Sekundärbatterien (110), die entlang einer ersten Richtung (X), die eine horizontale Richtung ist, gestapelt sind, und ein Paar von Endplatten (150), die an beiden Endabschnitten der Vielzahl von Sekundärbatterien (110) entlang der ersten Richtung (X) angeordnet sind, wobei jede Sekundärbatterie (110) eine Rechteckform mit zwei gegenüberliegenden Längsseiten, zwei gegenüberliegenden kurzen Seiten sowie einer Oberseite und
einer Unterseite, die sich gegenüberliegen, aufweist,
**dadurch gekennzeichnet, dass**
das erste Batteriemodul (100) und das zweite Batteriemodul (100) entlang einer zweiten Richtung (Z), die eine vertikale Richtung ist, angeordnet sind,
wobei sich ein Paar von Seitenrahmen (140) entlang der ersten Richtung (X) jeweils an einer ersten und zweiten Seitenfläche der Vielzahl von Sekundärbatterien (10) erstreckt und mit dem Paar von Endplatten (150) verbunden ist,
wobei ein oberer Rahmen (120) auf der oberen Fläche der Vielzahl von Sekundärbatterien (110) entlang der ersten Richtung (X) angeordnet ist, und
ein unterer Rahmen (130) unterhalb der unteren Fläche der Vielzahl von Sekundärbatterien (1110) entlang der ersten Richtung (X) ausgebildet ist,
wobei ein oberer Rahmen (120) des ersten Batteriemoduls (100) und ein unterer Rahmen (130) des zweiten Batteriemoduls (100) zur Ausbildung eines Gasentladungskanals zusammengesetzt sind,
wobei eine Vielzahl von Tragblöcken (200) zwischen dem ersten und zweiten Batteriemodui (100) angeordnet ist, wobei der mindestens eine Tragbock (200) getrennt von den Endplatten (150) ist und Kontaktflächen Kontaktieren der ersten und zweiten Batteriemodule (100) aufweist, wobei der mindestens eine Tragblock (200) als elastisches Teil derart ausgebildet ist, dass die ersten und zweiten Batterieimodule (100) einander elastisch tragen,
wobei sich jeder Tragblock (100) entlang der vertikalen Richtung erstreckt und mindestens eine Fläche von Sekundärbatterien (110) der ersten und zweiten Batterie-module (100) kontaktiert, und
die Vielzahl von Tragblöcken (200) auf zwei Seiten in Bezug auf den oberen Rahmen (120) angeordnet ist.

2. Batteriepack nach Anspruch 1, wobei jede der Vielzahl von Tragblöcken (200) an den ersten und zweiten Batteriemodulen (100) befestigt ist.

3. Batteriepack nach Anspruch 2, wobei jeder Tragblock (200) Gummi umfasst.

4. Batteriepack nach einem der Ansprüche 2 oder 3, wobei die Vielzahl von Sekundärbatterien (110) des ersten Batteriemoduls (100) um einen Abstand (d) entlang der zweiten Richtung (Z) beabstandet von der Vielzahl von Sekundärbatterien (110) des zweiten Batteriemoduls (100) vorgesehen ist, wobei die Höhe des mindestens einen Tragblocks (200) in nicht zusammengedrücktem Zustand größer ist als die Größe des Abstandes (d).

5. Batteriepack nach einem der vorstehenden Ansprüche, wobei an mindestens einer Kontaktfläche des Tragblocks (200) doppelseitiges Band angeklebt ist, um den Tragblock (200) mit den ersten und/oder zweiten Batteriemodulen (100) zu verkleben.

6. Batteriepack nach einem der Ansprüche 1 bis 5, wobei ein Klebmittel auf mindestens eine Kontaktfläche der Tragblöcke (200) aufgebracht ist, um den Tragbock (200) mit den ersten und/oder zweiten Batteriemodulen (100) zu verkleben.

7. Batteriepack nach einem der vorstehenden Ansprüche, wobei ein Durchgangsloch oder eine Rille in mindestens einer Kontaktfläche des mindestens einen Tragblocks (200) ausgebildet ist.

8. Batteriepack nach einem der vorstehenden Ansprüche, wobei eine Kontaktfläche des Tragblocks (200) mindestens zwei Sekundärbatterien des ersten bzw. zweiten Batteriemoduls (100) kontaktiert.

9. Batteriepack nach einem der vorstehenden Ansprüche, wobei der Tragblock (200) eine Zylinder-, Viereck-, Säulen- oder Tonnenform aufweist.

10. Fahrzeug (400), umfassend das Batteriepack (300) nach einem der Ansprüche 1 bis 9.

## Revendications

1. Bloc-batterie comprenant au moins un premier module de batteries (100) et un deuxième module de batteries (100) couplés l'un à l'autre, dans lequel chaque module de batteries (100) comprend :
une pluralité de batteries secondaires (110) empilées le long d'une première direction (X) étant une direction horizontale, et une paire de plaques d'extrémité (150) disposées au niveau des deux parties d'extrémité de la pluralité de batteries secondaires (110) le long de la première direction (X), chaque batterie secondaire (110) ayant une forme rectangulaire avec deux côtés longs opposés l'un à l'autre, deux côtés courts opposés l'un à l'autre et une face de dessus et une face de dessous opposées l'une à l'autre,
**caractérisé en ce que** :
le premier module de batteries (100) et le deuxième module de batteries (100) sont agencés le long d'une deuxième direction (Z) étant une direction verticale,
une paire de cadres latéraux (140) s'étendant le long de la première direction (X) sur une première et une deuxième surfaces latérales de la pluralité de batteries secondaire (110), respectivement, et couplés à la paire de plaques d'extrémité (150),
un cadre supérieur (120) disposé sur la surface de dessus de la pluralité de batteries secondaires (110) le long de la première direction (X), et
un cadre inférieur (130) formé sous la surface de dessous de la pluralité de batteries secondaires (110) le long de la première direction (X),
dans lequel un cadre supérieur (120) du premier module de batteries (100) et un cadre inférieur (130) du deuxième module de batteries (100) sont combinés pour former un passage d'évacuation de gaz,
une pluralité de blocs de support (200) est agencée entre les premier et deuxième modules de batteries (100), l'au moins un bloc de support (200) étant séparé des plaques d'extrémité (150) et ayant des surfaces de contact qui sont en contact avec les premier et deuxième modules de batteries (100), l'au moins un bloc de support (200) étant formé en tant qu'élément élastique de sorte que les premier et deuxième modules de batteries (100) se supportant l'un l'autre de manière élastique,
chaque bloc de support (100) s'étend le long de la direction verticale et entre en contact avec au moins une surface de batteries secondaires (110) des premier et deuxième modules de batteries (100), et
la pluralité de blocs de support (200) est disposée au niveau de deux côtés par rapport au cadre supérieur (120).

2. Bloc-batterie de la revendication 1, dans lequel chacun parmi la pluralité de blocs de support (200) est fixé aux premier et deuxième modules de batteries (100).

3. Bloc-batterie de la revendication 2, dans lequel chaque bloc de support (200) comprend du caoutchouc.

4. Bloc-batterie de l'une des revendications 2 ou 3, dans lequel la pluralité de batteries secondaires (110) du premier module de batteries (100) est prévue de manière espacée de la pluralité de batteries secondaires (110) du deuxième module de batteries (100) d'une distance (d) le long de la deuxième direction (Z), la hauteur de l'au moins un bloc de support (200) dans un état non comprimé étant supérieure à l'étendue de la distance (d).

5. Bloc-batterie de l'une des revendications précédentes, dans lequel un ruban à double face est collé sur au moins une surface de contact du bloc de support (200) de manière à faire adhérer le bloc de support (200) au premier et/ou au deuxième module(s) de batteries (100).

6. Bloc-batterie de l'une des revendications 1 à 5, dans lequel un agent adhésif est appliqué sur au moins une surface de contact des blocs de support (200) de manière à faire adhérer le bloc de support (200) au premier et/ou au deuxième module(s) de batteries (100).

7. Bloc-batterie de l'une des revendications précédentes, dans lequel un trou traversant ou une rainure est formé(e) dans au moins une surface de contact de l'au moins un bloc de support (200).

8. Bloc-batterie de l'une des revendications précédentes, dans lequel une surface de contact du bloc de support (200) est en contact avec au moins deux batteries secondaires du premier ou du deuxième module de batteries (100), respectivement.

9. Bloc-batterie de l'une des revendications précédentes, dans lequel le bloc de support (200) a une forme cylindrique, polygonale, de pilier, ou de tonneau.

10. Véhicule (400) comprenant le bloc-batterie (300) de l'une des revendications 1 à 9.
